# FASCICULE DE BREVET EUROPEEN

(11) **EP 1 184 213 B1**
(45) Date de publication et mention de la délivrance du brevet: **07.07.2004**
(21) Numéro de dépôt: 01402238.8
(22) Date de dépôt: 28.08.2001
(51) Int. Cl.: B60G 7/00

(54) **Train arrière de véhicule automobile et procédé de fabrication d'un tel train arrière**
Hinterachse für ein Kraftfahrzeug und ihr Herstellungsverfahren
Rear axle for a motor vehicle and method for manufacturing it

(30) Priorité: 31.08.2000 FR 0011138
(43) Date de publication de la demande: 06.03.2002
(73) Titulaire: Peugeot Citroen Automobiles SA, 92200 Neuilly sur Seine (FR)
(72) Inventeur: Truchet, Olivier, Stéphane, Michel, 91230 Montgeron (FR)
(74) Mandataire: Thinat, Michel

(56) Documents cités:
- EP-A- 0 952 015
- FR-A- 2 761 304
- GB-A- 2 299 556
- US-A- 5 322 317

## Description

La présente invention se rapporte à un train arrière de véhicule. Elle se rapporte également à un procédé de fabrication d'un tel train arrière.

On connaît des trains arrière de véhicule automobile du type comprenant des bras longitudinaux équipés chacun de moyens de support d'une roue du véhicule et une traverse déformable en torsion reliant les bras entre eux.

Généralement, dans ce type de train arrière, les bras longitudinaux sont réalisés à l'aide d'une technique traditionnelle de fonderie.

Comme on le conçoit, cette technique, bien qu'avantageuse à maints égards pour la réalisation de pièces métalliques ou d'alliage métallique, est d'un coût relativement élevé et est longue à mettre en oeuvre.

En outre, la relative faiblesse de la précision de cette technique ne permet pas de maîtriser parfaitement la forme des pièces du train ainsi réalisé.

FR-A-2 761 304 décrit un train arrière de véhicule automobile comprenant les caractéristiques énoncées dans le préambule de la revendication 1.

Cependant, ce document antérieur ne propose pas de technique de filage des bras longitudinaux du train arrière dans le but de maîtriser parfaitement leur forme.

EP-A-0 952 015, US-A-5 322 317 et GB-A-2 299 556 décrivent des bras d'essieu ou de suspension de véhicule automobile réalisés par filage ou extrusion, mais ne s'adressent pas à une technique particulière de filage permettant de maîtriser la forme de ces bras.

Le but de l'invention est de pallier ces inconvénients.

Elle a donc pour objet un train arrière de véhicule automobile du type précité et comprenant les caractéristiques de la partie caractérisante de la revendication 1.

On réduit ainsi sensiblement les coûts de fabrication, tout en augmentant la qualité des pièces.

Le train arrière de véhicule automobile selon l'invention peut également comporter une ou plusieurs des caractéristiques suivantes :
- chaque bras comporte un premier profilé sur lequel est fixée la traverse et destiné à s'articuler sur la caisse du véhicule et un deuxième profilé doté desdits moyens de support, lesdits profilés étant venus de filage et étant pourvus de moyens de fixation complémentaire ;
- les moyens de fixation complémentaires comportent deux parties mâle et femelle, de type tenon et mortaise, ménagées l'une sur le premier profilé et l'autre sur le deuxième profilé ;
- les premier et deuxième profilés sont en outre soudés l'un sur l'autre ;
- il comporte en outre un socle de support d'un ressort de suspension solidaire de chaque bras longitudinal ;
- le socle comporte une zone centrale délimitant un siège de réception du ressort et une zone périphérique dressée munie d'un épaulement en appui sur le premier profilé ;
- le socle est constitué par une pièce de fonderie ;
- le socle est soudé sur le premier profilé ;
- au moins l'une des extrémités libres de la traverse est pourvue d'au moins un trou longitudinal de réception d'un élément de fixation coopérant avec la partie médiane d'un bras longitudinal respectif; et
- il est au moins en partie réalisé en aluminium ou en alliage d'aluminium.

L'invention a également pour objet un procédé de fabrication d'un train arrière de véhicule automobile tel que défini ci-dessus, caractérisé en ce qu'il comporte les étapes consistant: réaliser deux bras longitudinaux constitués chacun d'un premier profilé et d'un deuxième profilé pourvus chacun de moyens de fixation complémentaires, par filage d'aluminium ou d'un alliage d'aluminium, selon une direction générale perpendiculaire à l'axe longitudinal des bras; réaliser, pour chaque bras, un socle de réception d'un ressort de suspension ; réaliser une traverse déformable en torsion ; assembler les premier et deuxième profilés et souder ces derniers l'un sur l'autre ; souder les socles sur les bras respectifs ; et fixer les bras sur les extrémités libres de la traverse.

D'autres caractéristiques et avantages de l'invention ressortiront de la description suivante, donnés uniquement à titre d'exemple, et faite en référence aux dessins annexés sur lesquels :
- la figure 1 est une vue en perspective d'une partie d'un train arrière conforme à l'invention ;
- la figure 2 est une vue en perspective du premier profilé du bras longitudinal du train arrière de la figure 1 ;
- la figure 3 est une vue à plus grande échelle, du deuxième profilé du bras longitudinal du train arrière de la figure 1 ; et
- la figure 4 est une vue de détail du socle de réception du ressort de suspension du train arrière de la figure 1.

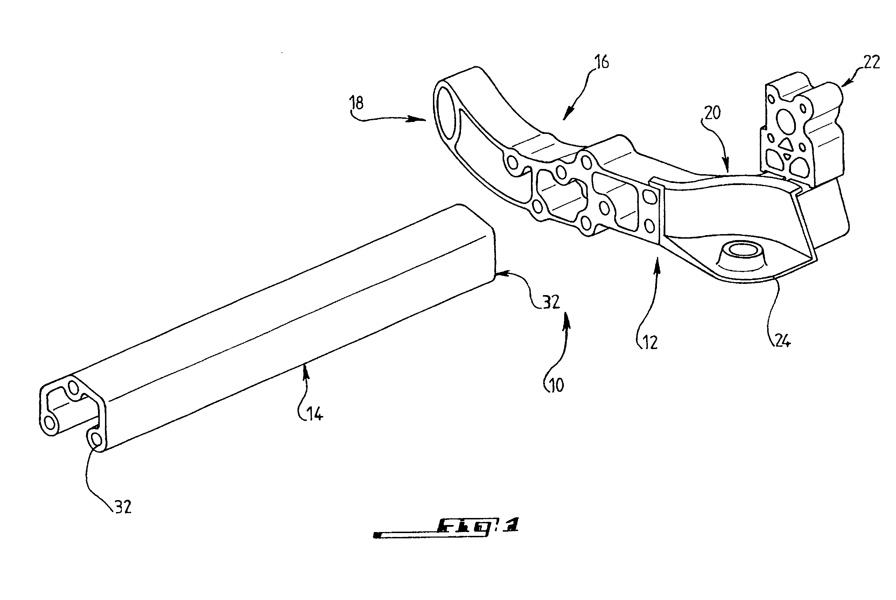

Sur la figure 1, on a représenté une partie d'un train arrière de véhicule automobile conforme à l'invention, désigné par la référence numérique générale 10.

Le train arrière 10 comporte deux bras longitudinaux 12, dont un seul est représenté sur cette figure, équipés chacun de moyens de support d'une roue du véhicule, et une traverse 14 déformable en torsion, sur chaque extrémité de laquelle est fixé l'un des bras 12.

Chaque bras 12 comporte un premier profilé 16 de forme longitudinale doté d'une première extrémité libre 18 conformée de manière à recevoir un organe d'articulation sur la caisse du véhicule automobile et une extrémité opposée 20 destinée à être reliée à la caisse du véhicule par un moyen de suspension, en l'espèce un ressort hélicoïdal de suspension.

Par ailleurs, chaque bras 12 comporte un deuxième profilé 22 destiné à supporter une roue du véhicule.

Enfin, un socle 24, destiné à recevoir une extrémité d'un ressort hélicoïdal de suspension vient se monter sur l'extrémité 20 correspondante du premier profilé 16.

Conformément à l'invention, le premier profilé 16 et le deuxième profilé 22 sont réalisés chacun à partir d'une technique de filage d'un métal ou d'un alliage métallique, également connu sous l'appellation d'extrusion.

Plus particulièrement, la direction de filage des premier et deuxième profilés s'étend perpendiculairement à l'axe longitudinal de chaque bras.

On obtient dès lors des pièces de section parfaitement maîtrisée et ce, avec un coût réduit.

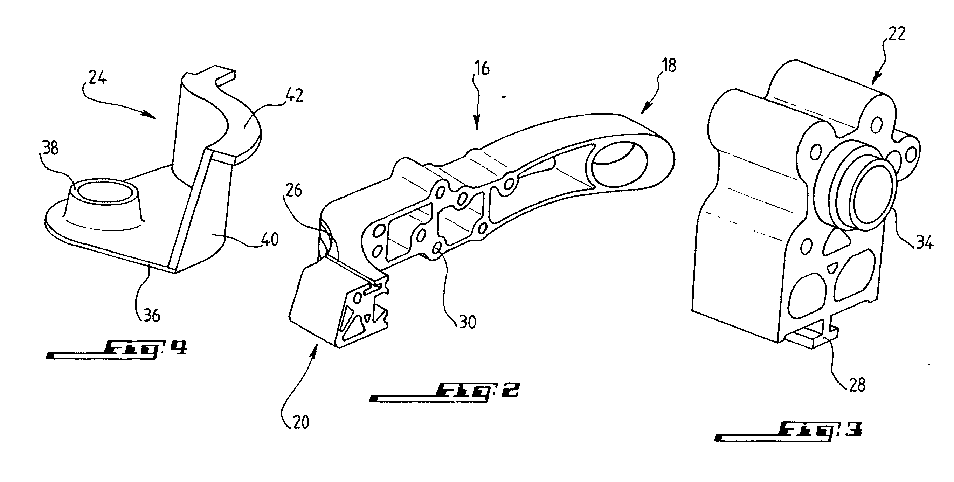

La structure de chacun des éléments constitutifs de chaque bras longitudinal 12 va maintenant être décrite en référence aux figures 2, 3 et 4.

En se référant tout d'abord à la figure 2, le premier profilé 16 comporte, comme mentionné précédemment, une première extrémité 18 conformée, comme cela est classique, de manière à recevoir un organe d'articulation du train arrière sur la caisse du véhicule, l'extrémité opposée 20 étant destinée, d'une part, à recevoir le socle 24 de réception du ressort de suspension et, d'autre part, le deuxième profilé 22.

A cet effet, cette extrémité 20 et le deuxième profilé 22 sont dotés de moyens de fixation complémentaires, se présentant sous la forme de moyens de fixation de type à tenon et mortaise.

On voit en effet sur la figure 2 que l'extrémité libre 20 du premier profilé 16 comporte, au niveau de sa surface supérieure, une rainure 26 constituant une glissière dans laquelle vient s'engager un tenon 28 ménagé dans la face inférieure du deuxième profilé 22.

Par ailleurs, la partie médiane du premier profilé 16 est pourvue d'un ensemble d'orifices, tels que 30, destinés chacun à recevoir un élément de fixation, par exemple une vis pourvue d'une tige filetée venant se visser dans une portion taraudée de trous, tels que 32, ménagés longitudinalement dans la traverse 14.

On notera que les trous ménagés dans la traverse peuvent être traversant. Dans ce cas, l'on utilise, pour la fixation des bras longitudinaux sur cette dernière, des tiges, constituant par exemple des barres anti-dévers, munies, sur chaque extrémité, d'un filetage destiné à recevoir un écrou de fixation correspondant.

En se référant maintenant à la figure 3, on voit que le deuxième profilé 22 comporte, outre le tenon 28 servant à sa fixation sur le premier profilé 16, un moyen de fixation 34 de type à pivot, d'axe sensiblement transversal à l'axe longitudinal du bras 12, servant à la fixation d'une roue du véhicule.

En se référant enfin à la figure 4, le socle 24, quant à lui, comporte une zone centrale 36 délimitant un siège de réception du ressort de suspension, laquelle est pourvue d'une saillie annulaire 38 de centrage du ressort par rapport au bras 12.

La zone centrale 36 est pourvue d'une zone périphérique 40 dressée prolongée extérieurement par un épaulement 42 destiné à venir en appui sur la face supérieure du premier profilé 16.

Par exemple, le socle 24 est réalisé à partir d'une pièce venue de fonderie.

Pour réaliser le train arrière qui vient d'être décrit, il convient tout d'abord de réaliser, par filage d'un métal ou d'un alliage métallique, de préférence en aluminium ou en alliage d'aluminium, les premier et deuxième profilés 16 et 22 dotés chacun de leurs moyens de fixation complémentaires et de réaliser le sôcle 24, au moyen d'une technique de fonderie classique.

On réalise par ailleurs la traverse 14 dans laquelle on a ménagé les trous 32 permettant la fixation des bras 12. Avantageusement, la traverse 14 est également réalisée par filage, ce qui permet notamment d'obtenir une section constante sur toute la longueur.

Après réalisation de ces différents éléments, on insert le tenon 28 dans la glissière 26 et l'on soude le deuxième profilé sur le premier profilé 16.

Par ailleurs, on soude le socle 24 sur l'extrémité libre 20 correspondante du premier profilé 16.

Enfin, on fixe chacun des bras longitudinaux 12 sur les extrémités respectives de la traverse 14.

## Revendications

1. Train arrière de véhicule automobile, comprenant deux bras longitudinaux (12) équipés chacun de moyens de support (34) d'une roue du véhicule et une traverse (14) déformable en torsion reliant les bras (12) entre eux, chaque bras étant réalisé au moins en partie par filage d'un métal ou d'un alliage métallique, **caractérisé en ce que** la direction du filage de chaque bras (12) s'étend perpendiculairement à l'axe longitudinal de ces derniers.

2. Train arrière selon la revendication 1, **caractérisé en ce que** chaque bras comporte un premier profilé (16) sur lequeul est fixée la traverse (14) et destiné à s'articuler sur la caisse du véhicule et un deuxième profilé (22) doté desdits moyens de support, lesdits profilés étant venus de filage et étant pourvus de moyens de fixation (26, 28) complémentaires.

3. Train arrière selon la revendication 2, **caractérisé en ce que** les moyens de fixation complémentaires comportent deux parties (26, 28) mâle et femelle, de type tenon et mortaise, ménagées l'une sur le premier profilé (16) et l'autre sur le deuxième profilé (22).

4. Train arrière selon l'une des revendications 2 et 3, **caractérisé en ce que** les premier et deuxième profilés sont en outre soudés l'un sur l'autre.

5. Train arrière selon l'une quelconque des revendications 1 à 4, **caractérisé en ce qu'**il comporte en outre un socle (24) de support d'un ressort de suspension solidaire de chaque bras longitudinal.

6. Train arrière selon la revendication 5, dépendante de la revendication 2, **caractérisé en ce que** le socle (24) comporte une zone centrale (36) délimitant un siège de réception du ressort de suspension et une zone périphérique (40) dressée munie d'un épaulement (42) en appui sur le premier profilé.

7. Train arrière selon l'une des revendications 5 et 6, **caractérisé en ce que** le socle (24) est constitué par une pièce de fonderie.

8. Train arrière selon l'une quelconque des revendications 5 à 7, dépendantes de la revendication 2, **caractérisé en ce que** le socle (24) est soudé sur le premier profilé.

9. Train arrière selon l'une quelconque des revendications 2 à 8, **caractérisé en ce qu'**au moins l'une des extrémités libres de la traverse est pourvue d'au moins un trou longitudinal (32) de réception d'un élément de fixation coopérant avec la partie médiane d'un bras longitudinal respectif.

10. Train arrière selon l'une quelconque des revendications 1 à 9, **caractérisé en ce qu'**il est au moins en partie réalisé en aluminium ou en alliage d'aluminium.

11. Procédé de fabrication d'un train arrière de véhicule automobile selon l'une quelconque des revendications 1 à 10, **caractérisé en ce qu'**il comporte les étapes consistant à :
- réaliser deux bras longitudinaux (12) constitués chacun d'un premier profilé (16) et d'un deuxième profilé (22) pourvus chacun de moyens de fixation complémentaires (26, 28), par filage d'aluminium ou d'un alliage d'aluminium, selon une direction générale perpendiculaire à l'axe longitudinal des bras ;
- réaliser, pour chaque bras, un socle (24) de réception d'un ressort de suspension ;
- réaliser une traverse (14) déformable en torsion ;
- assembler les premier et deuxième profilés (16, 22) et souder ces derniers l'un sur l'autre ;
- souder les socles (24) sur les bras respectifs ; et
- fixer les bras sur les extrémités libres de la traverse (14).

## Patentansprüche

1. Hinterachse für ein Kraftfahrzeug, welche zwei in Längsrichtung verlaufende Arme (12) aufweist, die jeweils mit Mitteln (34) zum Abstützen eines Rades des Fahrzeugs und mit einer Querstrebe (14) versehen sind, welche unter Verwindung verformbar ist und die Arme (12) mit einander verbindet, wobei jeder Arm zumindest teilweise durch Strangpressen aus einem Metall oder einer Metalllegierung hergestellt ist, **dadurch gekennzeichnet, dass** die Richtung beim Strangpressen jedes Arms (12) senkrecht zur Längsachse der Arme verläuft.

2. Hinterachse nach Anspruch 1, **dadurch gekennzeichnet, dass** jeder Arm einen ersten Profilabschnitt (16) aufweist, auf welchem die Querstrebe (14) befestigt ist und der zur Anlenkung auf dem Kastenaufbau des Fahrzeugs bestimmt ist, sowie einen zweiten Profilabschnitt (22) der mit den Abstützmitteln versehen ist, wobei die Profilabschnitte beim Strangpressen gebildet wurden und mit komplementären Befestigungsmitteln (26, 28) versehen sind.

3. Hinterachse nach Anspruch 2, **dadurch gekennzeichnet, dass** die komplementären Befestigungsmittel zwei Abschnitte (26, 28) aufweisen, nämlich einen Patrizenabschnitt und einen Matrizenabschnitt jeweils von der Art eines Zapfens bzw. eines Zapfenlochs, von denen der eine auf dem ersten Profilabschnitt (16) und der andere auf dem zweiten Profilabschnitt (22) angeordnet ist.

4. Hinterachse nach einem der Ansprüche 2 und 3, **dadurch gekennzeichnet, dass** der erste und der zweite Profilabschnitt außerdem aneinander angeschweißt sind.

5. Hinterachse nach einem der Ansprüche 1 bis 4, **dadurch gekennzeichnet, dass** sie des Weiteren einen Sockel (24) zur Abstützung einer fest mit jedem Längsarm verbundenen Tragfeder aufweist.

6. Hinterachse nach Anspruch 5 in Abhängigkeit von Anspruch 2, **dadurch gekennzeichnet, dass** der Sockel (24) einen Mittelbereich (36) aufweist, welcher einen Sitz zur Aufnahme der Tragfeder begrenzt, sowie einen Umfangsbereich (40), welcher hochgezogen und mit einer Schulter (42) versehen ist, die gegen den ersten Profilabschnitt anliegt.

7. Hinterachse nach einem der Ansprüche 5 und 6, **dadurch gekennzeichnet, dass** der Sockel (24) aus einem Gussteil besteht.

8. Hinterachse nach einem der Ansprüche 5 bis 7 in Abhängigkeit von Anspruch 2, **dadurch gekennzeichnet, dass** der Sockel (24) auf den ersten Profilabschnitt aufgeschweißt ist.

9. Hinterachse nach einem der Ansprüche 2 bis 8, **dadurch gekennzeichnet, dass** zumindest eines der freien Enden des Querträgers mit mindestens einem Langloch (32) zur Aufnahme eines Befestigungselements versehen ist, welches mit dem Mittelabschnitt eines jeweiligen Längsarms zusammenwirkt.

10. Hinterachse nach einem der Ansprüche 1 bis 9, **dadurch gekennzeichnet, dass** sie zumindest teilweise aus Aluminium oder aus einer Aluminiumlegierung hergestellt ist.

11. Verfahren zur Herstellung einer Hinterachse eines Kraftfahrzeugs nach einem der Ansprüche 1 bis 10, **dadurch gekennzeichnet, dass** es die folgenden Schritte umfasst:
- Ausbilden von zwei in Längsrichtung verlaufenden Armen (12), die jeweils aus einem ersten Profilabschnitt (16) und einem zweiten Profilabschnitt (22) gebildet werden, von denen jeder mit komplementären Befestigungsmitteln (26, 28) versehen wird, durch Strangpressen aus Aluminium oder einer Aluminiumlegierung in einer Richtung, die im Allgemeinen senkrecht zur Längsachse der Arme verläuft;
- Ausbilden eines Sockels (24) für jeden Arm zur Aufnahme einer Tragfeder;
- Ausbilden einer unter Verwindung verformbaren Querstrebe (14);
- Zusammenfügen des ersten und des zweiten Profilabschnitts (16, 22) und Verschweißen der Profilabschnitte aneinander;
- Anschweißen der Sockel (24) auf den entsprechenden Armen, und
- Befestigen der Arme an den freien Enden der Querstrebe (14).

## Claims

1. Rear axle for a motor vehicle, comprising two longitudinal arms (12), each fitted with means of support (34) of a wheel of the vehicle and a crosspiece (14), which can be deformed under torsion, connecting the arms (12) to each other, each arm being made at least partly by extruding metal or metal alloy, **characterised by** the fact that the direction of extrusion of each arm (12) extends perpendicular to its longitudinal axis.

2. Rear axle according to claim 1, **characterised by** the fact that each arm has a first section (16), on which the crosspiece (14) is fixed, intended to be linked to the body of the vehicle and a second section (22) fitted with the means of support, these sections having come from extrusion and being provided with additional means of fixing (26, 28).

3. Rear axle according to claim 2, **characterised by** the fact that the additional means of fixing comprise two parts (26, 28) male and female, of the mortice and tenon type, one arranged on the first section (16) and the other on the second section (22).

4. Rear axle according to one of claims 2 and 3, **characterised by** the fact that the first and second sections are also welded to each other.

5. , Rear axle according to any of claims 1 to 4, **characterised by** the fact that it also has a base (24) to support a suspension spring which is integral to each longitudinal arm.

6. Rear axle according to claim 5, depending on claim 2, **characterised by** the fact that the base (24) has a central area (36) delimiting a seat for taking the suspension spring and an upright peripheral area (40) provided with a shoulder (42) supported on the first section.

7. Rear axle according to one of claims 5 and 6, **characterised by** the fact that the base (24) is made up of a casting.

8. Rear axle according to any of claims 5 to 7, depending on claim 2, **characterised by** the fact that the base (24) is welded to the first section.

9. Rear axle according to any of claims 2 to 8, **characterised by** the fact that at least one of the free ends of the crosspiece is provided with at least one longitudinal hole (32) for taking a fixing element which works together with the middle part of the respective longitudinal arm.

10. Rear axle according to any of claims 1 to 9, **characterised by** the fact that it is at least partly made of aluminium or aluminium alloy.

11. Method for manufacturing a rear axle of a motor vehicle according to any of claims 1 to 10, **characterised by** the fact that it includes stages consisting of:
- making two longitudinal arms (12), each made up of a first section (16) and a second section (22), each provided with additional means of fixing (26, 28), by extruding aluminium or aluminium alloy according to a general direction perpendicular to the longitudinal axis of the arms;
- making a base (24) for taking a suspension spring for each arm;
- making a crosspiece (14) which can be deformed under torsion;
- assembling the first and second sections (16, 22) and welding these to each other;
- welding the bases (24) to the respective arms; and
- fixing the arms to the free ends of the crosspiece (14).
